# EUROPEAN PATENT SPECIFICATION

(11) **EP 0 536 403 B1**
(45) Date of publication and mention of the grant of the patent: **12.03.1997**
(21) Application number: 91914675.3
(22) Date of filing: 22.08.1991
(51) Int. Cl.: F03D 3/06

(54) **WIND POWER PRIME MOVER**
WINDKRAFTANLAGE
MOTEUR EOLIEN

(30) Priority: 20.03.1991 JP 55215/91
(43) Date of publication of application: 14.04.1993
(73) Proprietor: TONOUCHI, Kooji, Yokohama-shi, Kanagawa 220 (JP)
(72) Inventor: TONOUCHI, Kooji, Yokohama-shi, Kanagawa 220 (JP)
(74) Representative: Chauchard, Robert
(86) International application number: JP9101116
(87) International publication number: WO9216745

(56) References cited:
- DE-A- 3 638 620
- JP-C- 44 268
- JP-U-55 073 561
- JP-U-58 167 778
- US-A- 4 037 989

## Description

### FIELD OF TECHNOLOGY

The present invention relates to a wind power prime mover which is suitable for a power generating equipment by wind power according to the preamble of claim 1 and as disclosed in US-A-4 037 989.

### BACKGROUND TECHNOLOGY

As a part of the energy problem which have been raised in recent years, the extensive utilizations of natural energy such as wind power, water power, sunrays and so forth have attracted general attention, and various kinds of motive and power generating equipments have been proposed and developed. Among them, concerning the electricity generation by wind power, considerably large scaled electricity generating equipments by wind power have been installed and operated in test run.

However, as these kinds of conventional electricity generating equipments by wind power are mostly provided with two sail arm propellers rotating in a vertical level about a horizontal rotary shaft, they need a considerable large diameter for increasing the power generating capacities, so that the total height of the central supporting device has to be very important. Difficulties are encountered for their manufacturing, installation and maintenance. Costs for their structures, mechanical strength and maintainability are important, and their locations of installation are restricted to limited areas. Furthermore, as the inertial moments of their rotary parts are comparatively small with respect to their large scaled dimensions, their rotating speeds and torques are going to vary by an instantaneous variation of wind velocity.

The present invention has been executed and improved in consideration to the above mentioned prior aspects of the electricity generation by wind power. Therefore, the invention aims to provide a wind power prime mover which is hardly affected by an instantaneous variation of wind velocity, of which costs of manufacturing, transport, assembly and maintenance are comparatively reasonable, and which is suitable for the electricity power generating equipment being hardly restricted to the location of installation.

### DISCLOSURE OF THE INVENTION

The present invention, therefore, aims to execute the above-mentioned objects by constructing a wind power prime mover, as disclosed in claim 1, in which a windmill assembly comprising semicylindrical wind receiving members vertically erected on a plurality of equally spaced points on the circumference centering on a vertical rotary shaft in such manner that semicylindrical open parts of said wind receiving members are directed to the same circumferential directions with respect to individual tangents to said circumference and of knock-down-assembly construction with the major parts thereof joined to or disjoined from each other, and each of the top and bottom of said vertical rotary shaft are supported.

By the above-mentioned construction, this wind power prime mover can be designed to have comparatively lower height, as its semicylindrical wind receiving members are being horizontally rotated about a vertical rotary shaft. Moreover this prime mover is hardly affected by an instantaneous variation of wind velocity due to the flywheel effect being a fairly big rotary inertia moment. Furthermore, as the prime mover is constructed with parts the major number of which are joined to each other, the selection of its location is found easily and freely, and the costs of its manufacturing, delivery, assembling and construction are reasonable. The said prime mover can be installed, for example, on the roof of a building, and its maintenance is easily executed because its height from the ground or from the floor is low.

### BRIEF DESCRIPTION OF THE DRAWINGS

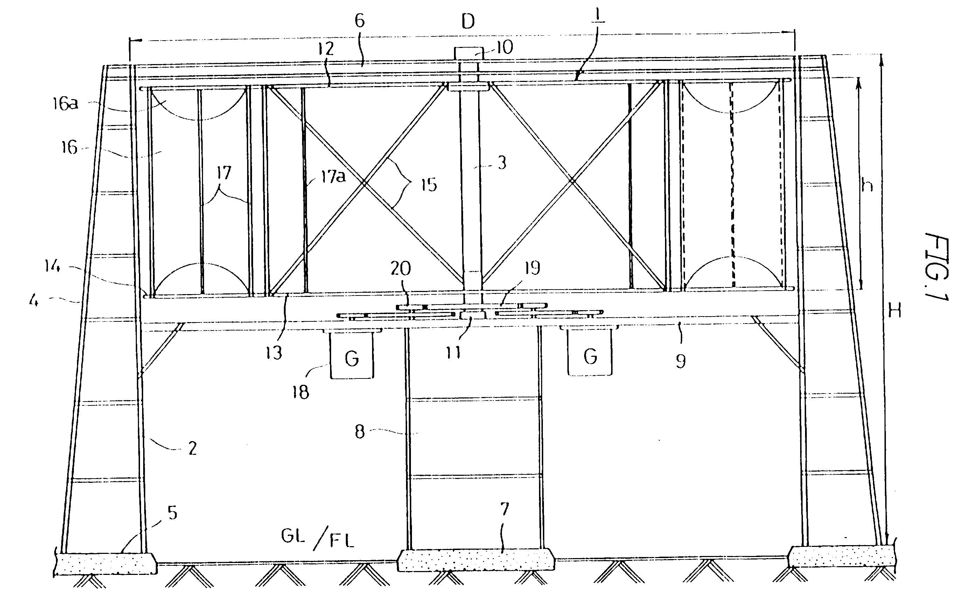

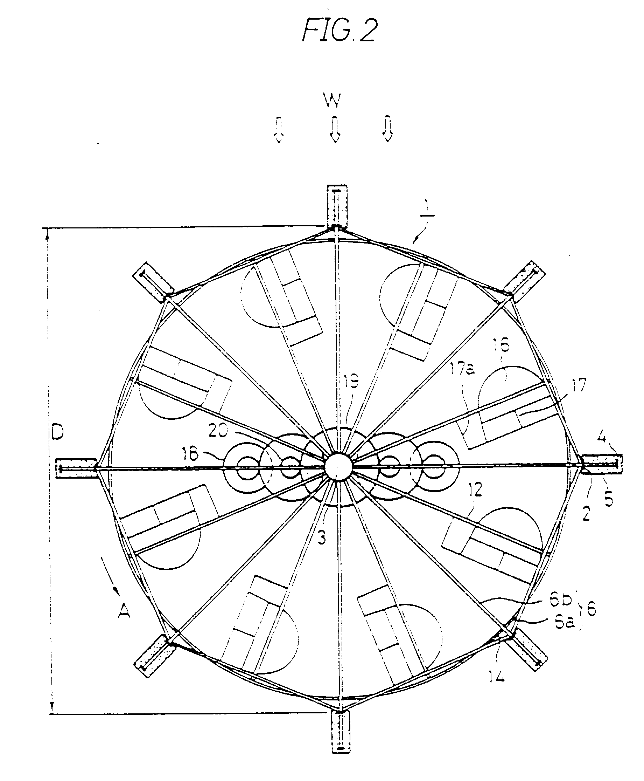

FIG. 1 shows an outline side view of a wind power prime mover of the present invention, and FIG. 2 is a top view of FIG. 1.

### PREFERRED EMBODIMENT OF THE INVENTION

Preferred embodiment of the present invention will now be described in detail with reference to the accompanying drawings.

Referring first to FIG. 1, an outline side view of an embodiment of a power generator according to the present invention, shows that a wind power prime mover comprising a windmill 1 is installed on the ground level GL or on the floor level FL. Windmill 1 is constructed so as to rotate horizontally around a vertical rotary shaft 3 inside eight supports 2 disposed at the angles of a regular octagon. Each support 2 is provided with an outside reinforcing support 4, and the supports 2 and 4 are fixed and installed upon basic concrete 5 on the ground level GL or floor level FL. An upper frame 6 is composed of frame members 6a each connecting two adjacent supports and of frame members 6b each connecting two diametrically opposed supports.

On the other side, a central support frame 8 having adequate height is formed upon basic concrete 7 on the ground level GL at the center of the octagon formed by the eight supports 2, and a lower frame 9 is constructed with frame members similar to the frame members 6a, 6b of upper frame 6.

Windmill 1 comprises upper/lower rotating members 12/13 extending radially from a vertically rotating shaft 3 so as to form equally spaced eight angles at which they are jointly reinforced by circular members 14. Upper/lower rotating members 12/13 corresponding to the upper and lower sides of the windmill are reinforced in hardness by reinforcing members 15 as diagonal members independently disposed in X shape.

Inside the circular members 14, between upper/lower rotating members 12/13 semicylindrical wind receiving members 16 having semicircular cross section are mounted firmly and vertically in such a manner that their semicylindrical open sides are directed in the same circumferential directions with respect to individual tangents to said circumference, and regulating plates 17 having a shape of vertical flat board are mounted firmly at the two vertical extreme parts and at the center part of the semicylindrical open sides, and also vertical regulating plates 17a broader than said regulating plates 17 are mounted firmly a little centrally relative to the inside vertical extreme parts. Also, the upper and lower extreme parts of the wind receiving members 16 are each formed in slope by a semicircular plate 16a. Horizontal regulating plates having a plurality of radius direction may be disposed on vertical regulating plates 17 and 17a.

Furthermore, the major composing parts of windmill 1 are manufactured from angle steel elements and steel plates joined to each other with bolts, so that the dismantling, transport, assembly and maintenance thereof are easy.

Thanks to its construction, if windmill 1 receives wind from the direction of the arrow as shown in figure 2, a high motive pressure within the semicylindrical inside of each wind receiving member 16 in the left side of the drawing, meanwhile, in the right side of the drawing, the resistance to wind power is smaller because of smooth circumference of the semicylindrical parts. Windmill 1 generates rotary power while rotating in the direction of arrow A due to the difference between the resistance values of wind power in both left and right sides. Furthermore, windmill 1 has a fairly big rotary inertia moment from its structure, and can be expected to provide a big flywheel effect, thereby it is hardly affected by an instantaneous variation of wind velocity after it starts the rotation.

To transmit the motive power of windmill 1 to a set of power generators 18 mounted on the lower frame 9, a big toothed wheel 19 is firmly mounted on the lower part of rotary shaft 3, concentrically, and a small toothed wheel (pinion) 20 is in gear with the big toothed wheel 19, and for the multiplying purpose, another small toothed wheel 20 is also firmly mounted on a separate shaft at an opposed diametrical location. Another big toothed wheel is mounted at the lower part of each pinion 20, which is constructed for multiplying the power to the generators.

Furthermore, for the purpose of regulating the speed of power generator 18 by wind W, overload of power generator 18, and others, a braking system may be provided to brake the circular members 14 as the parts braked at the upper and lower parts of the windmill, in order to stop the windmill when maintenance and inspection are required.

The feasibility study of the windmill was carried out and its practibility was confirmed by the execution of measuring the friction torque caused by stopping and rotating, testing the rotation by large scaled motor fan and others ; the feasibility study of a power generating equipment which is constructed in the aforementioned manner and way, was manufactured experimentally with the measurements of outer frame diameter D=6.06m, total height H=6.0m, and height of the windmill, h=2.6m.

In the embodiment described in reference to the drawings, windmill 1 was equipped with eight wind receiving members. However, numerous modifications and variations of the present invention are possible using different numbers of disposing members, structure details and others.

In this embodiment, an example of operation by a pair of power generators 18 is described, these generators being used not only as a power generator but as power sources for general purpose motive machines thereby adopting naturally a various kind of speed acceleration and reduction systems.

### INDUSTRIAL AVAILABILITY

As aforementioned, the wind power prime mover of the present invention is constructed with a plurality of semicylindrical wind receiving members horizontally rotating around a vertically erected rotary shaft, equally spaced and disposed at the periphery of the windmill. Therefore, this prime mover is expected to have comparatively a greater flywheel effect, and is constructed with the major parts thereof joined to each other. The selection of its location is comparatively found easily and freely, and it is very advantageous for manufacturing, transferring, assembling and maintenance.

## Claims

1. Wind power prime mover having a knock-down assembly construction with the major parts thereof joined to or disjoined from each other and comprising : a windmill assembly (1) including a rotatable framework (12-15) provided with a vertical central shaft (3) rotatably mounted on a fixed structure (6, 10, 9, 11), the top and bottom of said shaft being supported in the framework (12-15), and a plurality of vertically erected semicylindrical wind receiving members (16) equally angularly spaced at the periphery of the framework, said wind receiving members having each a vertical open side and being oriented in the windmill assembly so that they are tangent to the circumference of the framework ; and at least one power generator (18) provided on the fixed structure and driven by the motive power of the windmill assembly, said wind power prime mover being characterized in that vertical regulating plates (17) are firmly mounted at the two extreme parts and at the center part of the open sides of the wind receiving members (16).

2. Wind power prime mover according to claim 1, characterized in that further vertical regulating plates (17a) broader than the above vertical regulating plates (17) are mounted firmly a little centrally relative to the inside extreme parts of the open sides of the wind receiving members (16).

3. Wind power prime mover according to claim 1 or 2, characterized in that horizontal regulating plates are disposed on the vertical regulating plates (17, 17a).

4. Wind power prime mover according to any one of the preceding claims, characterized in that each wind receiving member (16) comprises semicircular bottom and top plates (16a) formed in slope.

5. Wind power prime mover according to any one of the preceding claims, characterized in that the framework (12-15) comprises eight equally angularly spaced upper members (12), eight equally angularly spaced lower members (13), the upper and lower members (12, 13) being in the same vertical planes and extending radially from the vertical central shaft (3), two reinforcing circular members (14) joining the free ends of the upper and lower members (12, 13), and reinforcing diagonal members (15) disposed in X shape and connecting the upper and lower members (12, 13).

## Patentansprüche

1. Windkraftmaschine mit einem zerlegbaren Aufbau, dessen Hauptteile miteinander verbunden oder auseinandergenommen werden, mit einer Windradeinrichtung (1) bestehend aus einem drehbaren Rahmen (12-15) mit einer vertikalen zentralen Welle (3), die an einem stationären Gerüst (6, 10, 9, 11) drehbar gelagert ist und die oben und unten im Rahmen (12-15) abgestützt ist, und einer Mehrzahl vertikal gelagerter, halb zylindrischer windaufnehmender Körper (16), die am Umfang des Rahmens in gleichen Winkeln verteilt sind, die eine vertikale offene Seite aufweisen und die derart in der Windradeinrichtung ausgerichtet sind, daß sie den Umfang des Rahmens tangieren, sowie mindestens einem am stationären Gerüst angeordneten und von der Antriebskraft der Windradeinrichtung angetriebenen Krafterzeuger (18), dadurch gekennzeichnet, daß vertikale Regelplatten (17) an beiden Endteilen und am zentralen Teil der offenen Seite der windaufnehmenden Körper (16) fest angebracht sind.

2. Windkraftmaschine nach Anspruch 1, dadurch gekennzeichnet, daß weitere vertikale Regelplatten (17a), die breiter als die vertikalen Regelplatten (17) sind, etwas zentral bezüglich des inneren Endteils der offenen Seite der windaufnehmenden Körper (16) fest angebracht sind.

3. Windkraftmaschine nach Anspruch 1 oder 2, dadurch gekennzeichnet, daß horizontale Regelplatten auf den vertikalen Regelplatten (17, 17a) angeordnet sind.

4. Windkraftmaschine nach einem der vorhergehenden Ansprüchen, dadurch gekennzeichnet, daß jeder windaufnehmende Körper (16) eine halbrunde, schräge untere und obere Platte (16a) aufweist.

5. Windkraftmaschine nach einem der vorhergehenden Ansprüche, dadurch gekennzeichnet, daß der Rahmen (12-15) aus acht in gleichen Winkeln verteilten oberen Körpern (12) besteht, aus acht in gleichen Winkeln verteilten unteren Körpern (13), wobei die oberen und unteren Körper (12, 13) in denselben vertikalen Ebenen liegen und sich radial von der vertikalen zentralen Welle (3) aus erstrecken, aus zwei runden Verstärkungskörpern (14), die die freien Enden der oberen und unteren Körper (12, 13) miteinander verbinden, und aus diagonalen Verstärkungskörpern (15), die X-förmig angeordnet sind und die oberen und unteren Körper (12, 13) miteinander verbinden.

## Revendications

1. Machine motrice éolienne comportant une structure démontable dont les principaux éléments peuvent être assemblés et désassemblés, et comprenant : un ensemble formant roue éolienne (1) qui comprend un bâti rotatif (12-15) muni d'un arbre central vertical (3) monté mobile en rotation sur une structure fixe (6, 10, 9, 11), la partie supérieure et la partie inférieure dudit arbre étant montées dans le bâti (12-15), et plusieurs organes de réception de vent semi-cylindriques dressés verticalement (16) disposés à intervalles angulaires égaux les uns des autres à la périphérie du bâti, organes de réception de vent qui présentent chacun un côté ouvert vertical et sont orientés dans l'ensemble formant roue éolienne de manière à être tangents à la circonférence du bâti; et au moins un générateur d'énergie (18) prévu sur la structure fixe et actionné par l'énergie motrice de l'ensemble formant roue éolienne, ladite machine motrice éolienne étant caractérisée en ce que des plaques de régulation verticales (17) sont montées solidement au niveau des deux parties extrêmes et de la partie centrale des côtés ouverts des organes de réception de vent (16).

2. Machine motrice éolienne selon la revendication 1, caractérisée en ce que d'autres plaques de régulation verticales (17a) plus larges que lesdites plaques de régulation verticales (17) sont montées solidement, légèrement au centre par rapport aux parties extrêmes intérieures des côtés ouverts des organes de réception de vent (16).

3. Machine motrice éolienne selon la revendication 1 ou 2, caractérisée en ce que des plaques de régulation horizontales sont disposées sur les plaques de régulation verticales (17, 17a).

4. Machine motrice éolienne selon l'une quelconque des revendications précédentes, caractérisée en ce que chaque organe de réception de vent (16) comprend des plaques supérieure et inférieure semi-circulaires (16a) conformées pour présenter une inclinaison.

5. Machine motrice éolienne selon l'une quelconque des revendications précédentes, caractérisée en ce que le bâti (12-15) comprend huit organes supérieurs (12) disposés à intervalles angulaires égaux, huit organes inférieurs (13) disposés à intervalles angulaires égaux, les organes supérieurs et inférieurs (12, 13) étant dans les mêmes plans verticaux et s'étendant radialement depuis l'arbre central vertical (3), deux organes de renforcement circulaires (14) qui relient les extrémités libres des organes supérieurs et inférieurs (12, 13), et des organes de renforcement diagonaux (15) disposés suivant une configuration en X et reliant les organes supérieurs et inférieurs (12, 13).
